# EUROPEAN PATENT APPLICATION

(11) **EP 4 661 170 A1**
(43) Date of publication of application: **10.12.2025**
(21) Application number: 23920471.2
(22) Date of filing: 09.02.2023
(51) Int. Cl.: H01M 50/15

(54) **END CAP ASSEMBLY, ENERGY STORAGE APPARATUS, AND ELECTRIC DEVICE**

(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: XIONG, Yongfeng, Xiamen, Fujian 361100 (CN); CHEN, Jinqiang, Xiamen, Fujian 361100 (CN)
(74) Representative: Viering, Jentschura & Partner mbB Patent- und Rechtsanwälte
(86) International application number: PCT/CN2023/075275
(87) International publication number: WO 2024/164263

(57) **Abstract**

An end cover assembly (10), an energy-storage apparatus (100), and an electricity-consumption device are provided. The end cover assembly (10) includes a bracket (11), a mounting member (13), and a cover plate (14). The bracket (11) includes a bottom plate (111) and a side baffle (112). The bottom plate (111) is connected to the side baffle (112), and the side baffle (112) extends in a thickness direction of the bottom plate (111). The bracket (11) has a plane-symmetric structure relative to a symmetry plane (S). The side baffle (112) is close to the symmetry plane (S), and the bottom plate (111) and the side baffle (112) cooperatively define an accommodating space (113). The mounting member (13) includes a top plate (131) and a first end plate (132) connected at an angle. The top plate (131) is disposed opposite to and spaced apart from the bottom plate (132), and the first end plate (132) is disposed opposite to and spaced apart from the side baffle (112), to define a first airflow channel (114). The cover plate (14) is connected to the top plate (131) and located at one side of the top plate (131) facing away from the bottom plate (111). The cover plate (14) is spaced apart from the side baffle (112) to define a second airflow channel (115), and the second airflow channel (115) communicates with the first airflow channel (114) and the accommodating space (113). The first airflow channel (114) and the second airflow channel (115) communicate with the aforementioned accommodating space (113), enabling air to gather towards the accommodating space (113) through the airflow channels, thereby improving the effect of air convergence below the end cover assembly (10) and an explosion-proof valve.

## Description

### TECHNICAL FIELD

This disclosure relates to the field of energy-storage technology, and in particular, to an end cover assembly, an energy-storage apparatus, and an electricity-consumption device.

### BACKGROUND

Energy-storage apparatuses are configured to store energy and release energy when required. Current energy-storage apparatuses are mainly rechargeable secondary batteries. At present, a common secondary battery mainly includes a casing, an electrode assembly, and an end cover assembly. The electrode assembly is received in the casing. The casing is covered by the end cover assembly. A tab of the electrode assembly is connected to a terminal post on the cover plate assembly.

In a secondary battery, due to its own manufacturing defects or under excitation of external temperature abnormalities, mechanical abnormalities, charging abnormalities, etc., irreversible side reactions, such as solid electrolyte interphase (SEI) film decomposition, positive-electrode material decomposition, and electrolyte decomposition, may occur inside the battery, and thus a large amount of heat may be generated, and small molecular gases may be released. Under special conditions (such as high temperature, short circuit, vibration, extrusion, and impact), gas expansion or smoke may easily occur, and fire or other thermal runaway may even occur, and thus there may be a certain safety hazard.

### SUMMARY

The disclosure aims to provide an end cover assembly, an energy-storage apparatus, and an electricity-consumption device that provide safety.

In order to achieve the purpose of the disclosure, the following technical methods are provided in the disclosure.

In a first aspect, an end cover assembly for an energy-storage apparatus is provided in embodiments of the disclosure. The end cover assembly includes a bracket, a mounting member, and a cover plate. The bracket includes a bottom plate and a side baffle. The bottom plate is connected to the side baffle, and the side baffle extends in a thickness direction of the bottom plate. The bracket has a plane-symmetric structure relative to a symmetry plane, and the symmetry plane is perpendicular to a plane at which the bottom plate is located. The side baffle is close to the symmetry plane, and the bottom plate and the side baffle cooperatively define an accommodating space. The mounting member includes a top plate and a first end plate connected at an angle. The top plate is disposed opposite to and spaced apart from the bottom plate, and the first end plate is disposed opposite to and spaced apart from the side baffle, to define a first airflow channel. The cover plate is connected to the top plate and located at one side of the top plate facing away from the bottom plate. The cover plate is spaced apart from the side baffle to define a second airflow channel, and the second airflow channel communicates with the first airflow channel and the accommodating space.

The side baffle having a plane-symmetric structure and the bottom plate are designed to define the accommodating space. An explosion-proof-valve bracket may be accommodated in the accommodating space, so that the explosion-proof-valve bracket is protected by the wrapping of the bottom plate and the side baffle. Moreover, the first airflow channel is defined between the first end plate and the side baffle, and the second airflow channel is defined between the cover plate and the side baffle. The first airflow channel and the second airflow channel communicate with the aforementioned accommodating space, enabling air to gather towards the accommodating space through the airflow channels, thereby improving the effect of air convergence below the end cover assembly and an explosion-proof valve, so that the explosion-proof valve is ensured to produce a corresponding effect. In this way, the lifespan and safety performance of the energy-storage apparatus can be further enhanced.

In one embodiment, the side baffle extends in the thickness direction of the bottom plate and extends towards one side facing away from the symmetry plane. The side baffle has a first curved segment, a second curved segment, and a third curved segment sequentially connected, and a ratio of the first curved segment to the second curved segment to the third curved segment is (2 - 3.5) : (1.2 - 1.8) : 1. A winding airflow path with an increasing degree of contour curvature is set to facilitate a more smooth air flow.

In one embodiment, the bracket further includes a first side plate and a protrusion. The side baffle, the bottom plate, and the protrusion each are connected to a same side of the first side plate. The protrusion is located at one side of the side baffle facing away from the bottom plate, and the protrusion is close to the symmetry plane. The mounting member includes a second side plate, and the second side plate is connected at an angle to the bottom plate and the first end plate. The second side plate is disposed opposite to the first side plate, the second side plate defines a fitting slot extending to the top plate, and the protrusion is in fit with and connected to the fitting slot. The protrusion is designed on the bracket and the fitting slot is designed on the mounting member, so that the protrusion may be in fit with and engaged with the fitting slot, thereby improving the connection stability between the bracket and the mounting member. Meanwhile, the protrusion may be mirror-symmetrical relative to the symmetry plane, enabling the protrusion to cooperate with the mounting member to provide support for a middle part of the end cover assembly, preventing a middle part of the bracket having a long strip shape from falling and deforming due to its own weight.

In one embodiment, a spaced distance *H*1 between one end of the side baffle away from the bottom plate and the cover plate is in a range from 0.01mm to 0.95mm. Designing the spaced distance *H*1 within this range facilitates air flowing to the accommodating space through the second airflow channel and prevents other foreign matter from passing through the airflow channel. In the case where the spaced distance *H*1 is less than the above range, the spacing is too small to define an airflow channel for the free flow of air. In the case where the spaced distance *H*1 is greater than the above range, the spacing is too large, and thus foreign matter such as broken tabs or insulating films inside the end cover assembly may easily pass through the airflow channel and drift into the accommodating space in an airflow direction, resulting in failure of the explosion-proof valve.

In one embodiment, a spaced distance *H*2 between one side of the protrusion close to the symmetry plane and the side baffle in a length direction of the bottom plate is in a range from 1.5mm to 4.5mm. Designing the spaced distance *H*2 within this range ensures gaps between the outermost edges on both sides of the side baffle and a part of the mounting member closest to the explosion-proof-valve bracket, ensuring that there is sufficient space between the first end plate and the side baffle to define the first airflow channel. It also facilitates the snap-fit assembly of the protrusion and the fitting slot, and a cooperating allowance is designed. In the case where the spaced distance *H*2 is less than the above range, the spacing is too small to define an airflow channel for the free flow of air. In the case where the spaced distance *H*2 is greater than the above range, the spacing is too large, and thus foreign matter such as broken tabs or insulating films inside the end cover assembly may easily pass through the airflow channel and drift into the accommodating space in an airflow direction, resulting in failure of the explosion-proof valve.

In one embodiment, an orthographic projection of the protrusion on the bottom plate is in a shape of a trapezoid, one end of the protrusion away from the first side plate is a short base of the trapezoid, and one end of the protrusion connected to the first side plate is a long base of the trapezoid. The protrusion is disposed on the bracket and the orthographic projection of the protrusion on the bottom plate is in a shape of a trapezoid, which facilitates the smoothness when the protrusion is engaged with the mounting member, thereby improving the reliability of the assembly of the end cover assembly.

In one embodiment, a ratio *D*1 : *H*3 of a depth *D*1 of the fitting slot to a height *H*3 of the protrusion protruding relative to the first side plate is in a range from 1.15 to 3.85. The ratio of the depth *D*1 of the fitting slot to the height *H*3 of the protrusion is designed to be greater than 1, ensuring that the protrusion can be fully inserted into the fitting slot.

In one embodiment, at least two adjacent surfaces of the protrusion which are connected to the second side plate are connected via an arc surface. The protrusion is designed with an arc surface connection, which facilitates the insertion of the protrusion into the fitting slot and reduces the resistance during the insertion of the protrusion.

In one embodiment, the protrusion has a first oblique surface between an end surface of the protrusion facing away from the first side plate and a surface of the protrusion facing towards the bottom plate, and the fitting slot has a corresponding second oblique surface at an opening of the fitting slot. The protrusion is designed to have the first oblique surface and the opening of the fitting slot is designed to have the second oblique surface, which facilitates smooth insertion of the protrusion by means of the cooperation of the oblique surfaces, thereby improving the convenience of the installation and insertion of the protrusion.

In one embodiment, the bracket further includes a first buckle, the first buckle is connected to the first side plate, and the first buckle is located at one end of the protrusion away from the symmetry plane. The mounting member further includes a snapping plate on a same plane with the second side plate, the snapping plate defines a first snapping hole opposite to the first buckle, and the first buckle passes through the first snapping hole to connect to the snapping plate. The first buckle is disposed on the bracket and the first snapping hole is defined on the mounting member, which facilitates mutual fixation of the bracket and the mounting member by means of the first buckle. Moreover, the first buckle may be mirror-symmetrical relative to the symmetry plane, so that the bracket has two symmetrical first buckles. With the snap-fit of the two first buckles, the first buckles may still be snap-fitted with the mounting member even if the bracket breaks, improving the stability and thereby enhancing the service life of the energy-storage apparatus.

In one embodiment, the first buckle has a third oblique surface at one end of the first buckle away from the first side plate, and the first snapping hole has a corresponding fourth oblique surface at an opening of the first snapping hole. The first buckle having the third oblique surface and the first snapping hole having the fourth oblique surface facilitate a smooth insertion of the first buckle by means of the cooperation of the oblique surfaces, thereby improving the speed of the installation and insertion of the first buckle.

In one embodiment, the snapping plate has a first surface and a second surface opposite to each other, the first surface faces towards the first side plate, the first snapping hole extends through from the first surface to the second surface, and the first snapping hole has a tapered shape in a direction from the first surface to the second surface. The first snapping hole is designed to have a tapered shape in the direction from the first surface to the second surface, so that all sides of the first snapping hole may be shaped as oblique surfaces to guide the first buckle, facilitating the insertion and engagement of the first buckle.

In one embodiment, the mounting member further comprises a rib. The rib is connected to the second surface and the top plate, and extends in a direction facing away from the first surface. The rib is disposed on one side of the snapping plate, so that the structural strength of the snapping plate may be enhanced, preventing bending deformation of the snapping plate. Meanwhile, the rib may also be used to protect the end of the first buckle, avoiding accidental disengagement due to mistaken touching, thereby enhancing the connection stability of the first buckle and improving the service life of the energy-storage apparatus.

In one embodiment, the top plate includes a first boss portion and a second boss portion connected to each other. The first boss portion protrudes from a plane at which the top plate is located to a direction away from the bottom plate, the second boss portion is located at one end of the first boss portion away from the bottom plate, and an annular step is formed at a connection between the first boss portion and the second boss portion. The first boss portion and the second boss portion are formed on the top plate, and the first boss portion and the second boss portion combine to form an annular step, which helps to improve the sealing performance between the mounting member and the cover plate, thereby enhancing the safety performance of the energy-storage apparatus. It also facilitates the snap-fit positioning when the top plate is installed onto the cover plate from bottom to top, reducing assembly difficulty.

In one embodiment, the second boss portion defines a terminal-post hole. The terminal-post hole has a tapered shape in a direction from the bottom plate to the top plate. An aperture size of part of the terminal-post hole close to the bottom plate is greater than an aperture size of part of the terminal-post hole away from the bottom plate. The terminal-post hole designed in a tapered shape facilitates the deformation and outward expansion of a flange portion of the sealing ring under pressure during a pressing process of a terminal-post, so that the flange portion of the sealing ring abuts against the terminal-post hole, thereby filling the gaps in the terminal-post hole. The contact area between the flange portion of the sealing ring and side walls of the terminal-post hole increases, further improving the sealing performance and thereby enhancing the safety performance of the energy-storage apparatus.

In one embodiment, the end cover assembly further includes an explosion-proof-valve bracket. The bracket further includes a second buckle, the second buckle is connected to the first side plate, and the second buckle is located between the protrusion and the symmetry plane. The explosion-proof-valve bracket defines a second snapping hole, the second buckle passes through the second snapping hole to connect to the explosion-proof-valve bracket, and a height of the second buckle protruding relative to the first side plate is greater than a height of the first buckle protruding relative to the first side plate. The second buckle is disposed on the bracket and the second snapping hole is defined on the explosion-proof-valve bracket, which facilitates mutual fixation of the bracket and the explosion-proof-valve bracket by means of the second buckle. Moreover, the benefit of the second buckle being longer than the first buckle is that during engagement, the second buckle in the middle region may be engaged first, followed by engaging the first buckles at both ends. This reduces the difficulty of simultaneous engagement of the buckles and lowers the requirements for precision in the assembly operation.

In one embodiment, the bracket is implemented as two brackets. The two brackets are mirror-symmetrical, and the mounting member is located between the two brackets. The number of molds required for manufacturing the bracket is reduced, and the compatibility rate of the bracket is improved, thereby reducing the manufacturing cost. The bracket is designed as two mirror-symmetrical brackets with the mounting member located between the two brackets, so that the mounting member may be effectively fixed using the brackets, and the forces applied at both ends are the same, avoiding deformation of the mounting member.

In a second aspect, an energy-storage apparatus is provided in embodiments of the disclosure. The energy-storage apparatus includes an electrode assembly, a housing, and the end cover assembly of any one of embodiments of the first aspect. The electrode assembly is disposed within the housing, and the end cover assembly is electrically connected to the electrode assembly.

In a third aspect, an electricity-consumption device is provided in embodiments of the disclosure. The electricity-consumption device includes the energy-storage apparatus of the second aspect, and the energy-storage apparatus is configured to supply power to the electricity-consumption device.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a perspective view of an energy-storage apparatus according to an embodiment of the disclosure.
FIG. 2 is an exploded view of an energy-storage apparatus according to an embodiment of the disclosure.
FIG. 3 is an exploded view of an end cover assembly according to an embodiment of the disclosure.
FIG. 4 is a schematic cross-sectional view of an end cover assembly according to an embodiment of the disclosure.
FIG. 5 is a schematic structural view of a bracket, a mounting member, and an explosion-proof-valve bracket according to an embodiment of the disclosure.
FIG. 6 is a schematic structural view of a bracket according to an embodiment of the disclosure.
FIG. 7 is a schematic structural view of a mounting member according to an embodiment of the disclosure.
FIG. 8 is a schematic view of an assembling of a protrusion and a fitting slot according to an embodiment of the disclosure.
FIG. 9 is a schematic structural view of a snapping plate according to an embodiment of the disclosure.
FIG. 10 is a top view of a mounting member according to an embodiment of the disclosure.
FIG. 11 is a schematic cross-sectional view of a mounting member according to an embodiment of the disclosure.

Description of reference signs:
100 - energy-storage apparatus, 10 - end cover assembly, 20 - electrode assembly, 30 - housing;
11 - bracket, 111 - bottom plate, 112 - side baffle, 1121 - first curved segment, 1122 - second curved segment, 1123 - third curved segment, 112A - left side baffle, 112B - right side baffle, 113 - accommodating space, 114 - first airflow channel, 115 - second airflow channel, 116 - first side plate, 117 - protrusion, 117A - left protrusion, 117B - right protrusion, 1171 - bottom surface, 1172 - top surface, 1173 - oblique edge surface, 118 - first buckle, 118A - first left buckle, 118B - first right buckle, 1181 - third oblique surface, 119 - second buckle, 119A - second left buckle, 119B - second right buckle, 11A - first bracket, 11B - second bracket, S - symmetry plane;
12 - explosion-proof-valve bracket, 121 - second snapping hole, 122 - baffle, 123 - first connecting plate, 124 - second connecting plate;
13 - mounting member, 13A - positive-electrode mounting member, 13B - negative-electrode mounting member, 131 - top plate, 132 - first end plate, 132S - second end plate, 133 - second side plate, 1331 - fitting slot, 1332 - second oblique surface, 134 - snapping plate, 1341 - first snapping hole, 1342 - left edge, 1343 - right edge, 1344 - upper edge, 1345 - lower edge, 1346 - fourth oblique surface, 1347 - first surface, 1348 - second surface, 135 - rib, 136 - first boss portion, 137 - second boss portion, 138 - terminal-post space, 139 - terminal-post hole;
14 - cover plate.

### DETAILED DESCRIPTION

The following will illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

It may be noted that when a component is referred to as "fixed to" another component, the component may be directly positioned on the other component or an intermediate component may exist therebetween. When a component is referred to as "connected to" another component, the component may be directly connected to the other component or an intermediate component may exist therebetween simultaneously.

Unless otherwise defined, all technical and scientific terms used in the disclosure have the same meaning as commonly understood by those of ordinary skill in the art of the disclosure. The terms used in the detailed description in the disclosure are for the purpose of describing embodiments only and are not intended to limit the disclosure. The term "and/or" in the disclosure includes any and all combinations of one or more related listed items.

The following will describe in detail embodiments of the disclosure with reference to the accompanying drawings. Various embodiments and features therein may be implemented in any combination with each other without conflict.

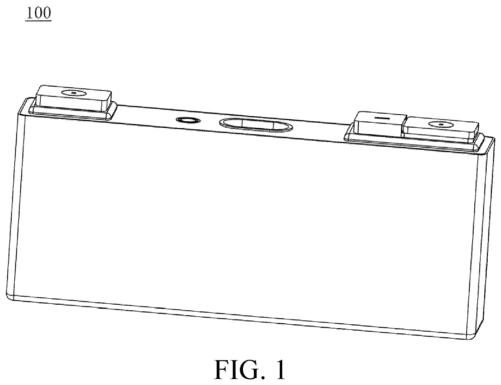

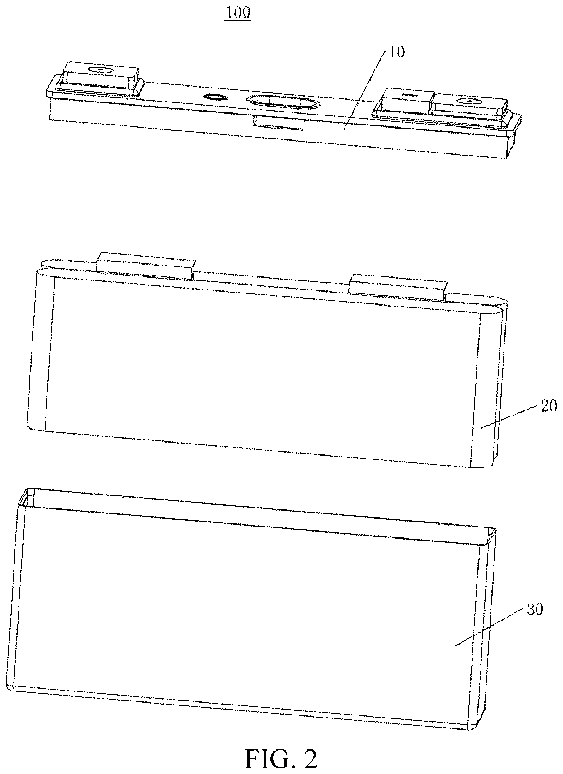

Reference is made to FIG. 1 and FIG. 2, embodiments of the disclosure provide an energy-storage apparatus 100, including an electrode assembly 20, a housing 30, and an end cover plate 10. The electrode assembly 20 is disposed within the housing 30, and the end cover assembly 10 is electrically connected to the electrode assembly 20. The end cover assembly covers at an opening of the housing 30 and seals the housing 30.

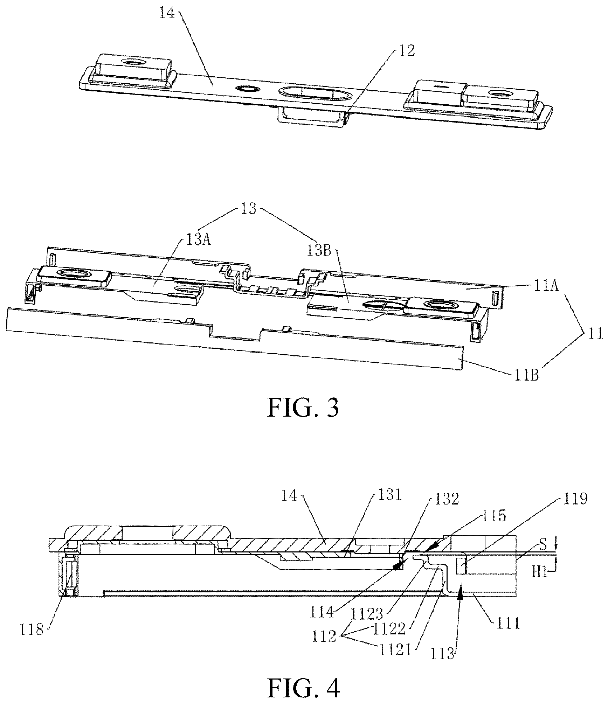

Embodiments of the disclosure provide the end cover assembly 10 for the energy-storage apparatus 10. Reference is made to FIG. 3, the end cover assembly 10 includes a bracket 11, a mounting member 13, a cover plate 14, and an explosion-proof-valve bracket 12.

Specifically, reference is made to FIG. 4, the bracket 11 includes a bottom plate 111 and a side baffle 112. The bottom plate 111 is connected to the side baffle 112, and the side baffle 112 extends in a thickness direction of the bottom plate 111. The bracket 11 has a plane-symmetric structure relative to a symmetry plane S, and the symmetry plane S is perpendicular to a plane at which the bottom plate 111 is located. The side baffle 112 is close to the symmetry plane S, and the bottom plate 111 and the side baffle 112 cooperatively define an accommodating space 113.

Optionally, the bracket 11 is made of an insulating material, specifically a plastic material, such as a polypropylene (PP) material. The bottom plate 111 is plate-shaped, with a substantially convex plate surface. The bottom plate 111 has a length, a width, and a thickness. When describing various structures subsequently, an extension direction of the length of the bottom plate 111 is taken as a length direction, an extension direction of the width of the bottom plate 111 is taken as a width direction, and an extension direction of the thickness of the bottom plate 111 is taken as a thickness direction.

Optionally, reference is made to FIG. 3 and FIG. 4, the bracket 11 may have a mirror-symmetric structure. The symmetry plane S of the bracket 11 may be located at the middle of the bracket 11. For example, a midpoint in the length direction of the bottom plate 111 is taken, and a section perpendicular to the bottom plate 111 is made at the midpoint position, a left end and a right end of the bracket 11 cut by the section may be mirror-symmetrical relative to the section. Moreover, the section may be the symmetry plane S.

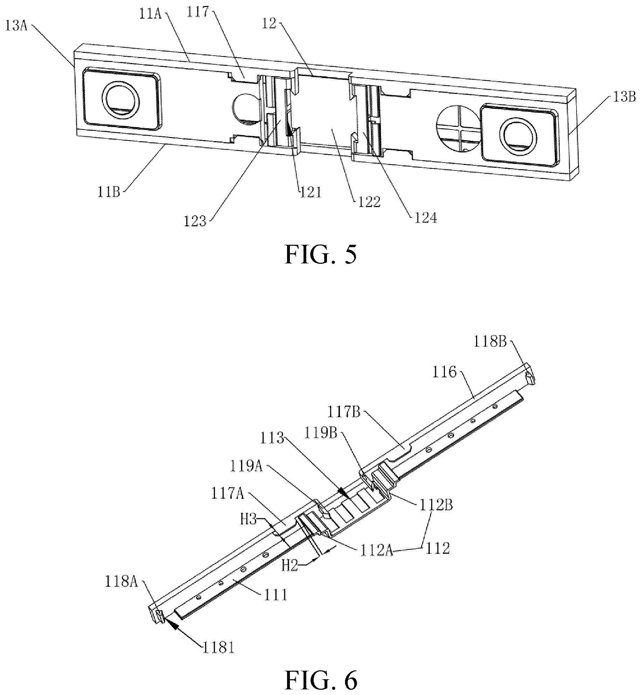

Optionally, reference is made to FIG. 4 and FIG. 6, the side baffle 112 is close to the symmetry plane S, and there is another corresponding side baffle 112, where the two side baffles 112 are symmetrical relative to the symmetry plane S. Specifically, the side baffle 112 may include a left side baffle 112A and a right side baffle 112B. Therefore, the left side baffle 112A and the right side baffle 112B are disposed opposite to each other in the length direction of the bottom plate 111. The left side baffle 112A bends and extends in the thickness direction of the bottom plate 111, and bends and extends towards one side facing away from the right side baffle 112B. The right side baffle 112B bends and extends in the thickness direction of the bottom plate 111, and bends and extends towards one side facing away from the left side baffle 112A. The bottom plate 111, the left side baffle 112A, and the right side baffle 112B cooperatively define the accommodating space 113. The accommodating space 113 is used to accommodate the explosion-proof-valve bracket 12.

Optionally, reference is made to FIG. 4 and FIG. 5, the mounting member 13 includes a positive-electrode mounting member 13A and a negative-electrode mounting member 13B. Both the positive-electrode mounting member 13A and the negative-electrode mounting member 13B are connected to the bracket 11. Moreover, in the length direction of the bottom plate 111, the positive-electrode mounting member 13A and the negative-electrode mounting member 13B are disposed opposite to each other, with the symmetry plane S located between the positive-electrode mounting member 13A and the negative-electrode mounting member 13B. Therefore, the following description regarding the mounting member 13 may be considered as description about structures common to both the positive-electrode mounting member 13A and the negative-electrode mounting member 13B.

Optionally, reference is made to FIG. 4, the mounting member 13 includes a top plate 131 and a first end plate 132 connected at an angle. The top plate 131 is disposed opposite to and spaced apart from the bottom plate 111, and the first end plate 132 is disposed opposite to and spaced apart from the side baffle 112, to define a first airflow channel 114.

Optionally, the mounting member 13 may specifically be made of a plastic material, such as PP material and polyphenylene ether (PPE) material, which is a thermoplastic engineering plastic. The mounting member 13 is substantially plate-shaped, with a substantially rectangular plate surface.

Optionally, reference is made to FIG. 4, the mounting member 13 includes a top plate 131 and a first end plate 132 connected at an angle. The top plate 131 is disposed opposite to and spaced apart from the bottom plate 111. The top plate 131 may be plate-shaped, with a rectangular plate surface. A length direction of the top plate 131, a width direction of the top plate 131, and a thickness direction of the top plate 131 are consistent with the length direction of the aforementioned bottom plate 111, the width direction of the aforementioned bottom plate 111, and the thickness direction of the aforementioned bottom plate 111, respectively. The first end plate 132 may be plate-shaped, strip-shaped, block-shaped, etc., which is not limited herein. An angle between the first end plate 132 and the top plate 131 may be 90°. The first end plate 132 and the top plate 131 may be integrally formed, for example, integrally formed by an injection molding process. The first end plate 132 is disposed on the top plate 131 at one end of the top plate 131 in the length direction of the top plate 131 close to the side baffle 112.

Optionally, the first end plate 132 is opposite to and spaced apart from one end of the side baffle 112 away from the bottom plate 111, so as to define the first airflow channel 114. As can be seen in FIG. 4, the first end plate 132 is spaced apart from the side baffle 112 in the length direction of the bottom plate 111. The first airflow channel 114 communicates with the aforementioned accommodating space 113, and air flows into the accommodating space 113 through the first airflow channel 114.

Optionally, the cover plate 14 is connected to the top plate 131 and located at one side of the top plate 131 facing away from the bottom plate 111. The cover plate 14 may be plate-shaped, with a rectangular plate surface. A length direction of the top plate 131, a width direction of the top plate 131, and a thickness direction of the top plate 131 are consistent with the length direction of the aforementioned bottom plate 111, the width direction of the aforementioned bottom plate 111, and the thickness direction of the aforementioned bottom plate 111, respectively.

Optionally, reference is made to FIG. 4, the cover plate 14 is spaced apart from one end of the side baffle 112 away from the bottom plate 111, to define a second airflow channel 115. As can be seen in FIG. 4, the cover plate 14 is spaced apart from the side baffle 112 in the thickness direction of the bottom plate 111. The second airflow channel 115 communicates with the first airflow channel 114 and the accommodating space 113. Air flows into the accommodating space 113 through the first airflow channel 114 and the second airflow channel 115 in sequence.

The side baffle 112 having a plane-symmetric structure and the bottom plate 111 are designed to define the accommodating space 113. An explosion-proof-valve bracket 12 may be accommodated in the accommodating space 113, so that the explosion-proof-valve bracket 12 is protected by the wrapping of the bottom plate 111 and the side baffle 112. Moreover, the first airflow channel 114 is defined between the first end plate 132 and the side baffle 112, and the second airflow channel 115 is defined between the cover plate 14 and the side baffle 112. The first airflow channel 114 and the second airflow channel 115 communicate with the aforementioned accommodating space 113, enabling air to gather towards the accommodating space 113 through the airflow channels, thereby improving the effect of air convergence below the end cover assembly 10 and an explosion-proof valve, so that the explosion-proof valve is ensured to produce a corresponding effect. In this way, the lifespan and safety performance of the energy-storage apparatus 100 can be further enhanced.

In an embodiment, reference is made to FIG. 4, the side baffle 112 extends in the thickness direction of the bottom plate 111 and extends towards one side facing away from the symmetry plane S. The side baffle 112 has a first curved segment 1121, a second curved segment 1122, and a third curved segment 1123 sequentially connected, and a ratio of the first curved segment 1121 to the second curved segment 1122 to the third curved segment 1123 is (2 - 3.5) : (1.2 - 1.8) : 1. A winding airflow path with an increasing degree of contour curvature is set to facilitate a more smooth air flow.

In an embodiment, reference is made to FIG. 5 to FIG. 7, the bracket 11 further includes a first side plate 116 and a protrusion 117. The side baffle 112, the bottom plate 111, and the protrusion 117 each are connected to a same side of the first side plate 116. The protrusion 17 is located at one side of the side baffle 112 facing away from the bottom plate 111, and the protrusion 117 is close to the symmetry plane S. The mounting member 13 includes a second side plate 133, and the second side plate 133 is connected at an angle to the bottom plate 111 and the first end plate 132. The second side plate 133 is disposed opposite to the first side plate 116, the second side plate 133 defines a fitting slot 1331 extending to the top plate 131, and the protrusion 117 is in fit with and connected to the fitting slot 1331.

Specifically, the first side plate 116 may be plate-shaped, with a substantially concave plate surface. The first side plate 116 may be connected to the bottom plate 111 at an angle. Optionally, a connection angle between the first side plate 116 and the bottom plate 111 may be 90°. The first side plate 116 extends in the thickness direction of the bottom plate 111, and the side baffle 112 and the bottom plate 111 each are connected to a same side of the first side plate 116. The side baffle 112, the bottom plate 111, and the first side plate 116 together cooperatively define the aforementioned accommodating space 113.

Optionally, the protrusion 117 is also connected to the first side plate 116 and is on the same side as the bottom plate 111. The protrusion 117 is located on the first side plate 116 at one side of the bottom plate 111 in the thickness direction of the bottom plate 111 away from the bottom plate 111, that is, the protrusion 117 is located on one side of the side baffle 112 facing away from the bottom plate 111. The protrusion 117 is close to the symmetry plane S, and there is another corresponding protrusion 117, where the two protrusions 117 are symmetrical relative to the symmetry plane S. Specifically, the protrusion 117 may include a left protrusion 117A and a right protrusion 117B. Therefore, the left protrusion 117A and the right protrusion 117B are disposed opposite to each other in the length direction of the bottom plate 111. The protrusion 117 is used to engage with the mounting member 13.

Optionally, the second side plate 133 may be plate-shaped, with a plate surface in a shape of a right-angled trapezoid. A right-angled side of the second side plate 133 may be connected to the first end plate 132, and a long base of the second side plate 133 may be connected to the top plate 131. An angle between the second side plate 133 and the top plate 131 may be 90°, and an angle between the second side plate 133 and the first end plate 132 may also be 90°. The second side plate 133 is disposed on the top plate 131 at one end of the top plate 131 in the width direction of the top plate 131 close to the first side plate 116. Preferably, the second side plate 133 is disposed opposite to the first side plate 116, and the second side plate 133 may contact the first side plate 116.

Optionally, the fitting slot 1331 may be defined at a position of the second side plate 133 near the top plate 131. The fitting slot 1331 may extend upward to the top plate 131 and extend through the top plate 131 in the thickness direction of the top plate 131. The protrusion 117 extends into the fitting slot 1331, thereby realizing the engagement between the protrusion 117 and the mounting member 13. It may be understood that, the top plate 131 is also located on the same side of the first side plate 116 as the protrusion 117 and the bottom plate 111. Moreover, the top plate 131 does not exceed the first side plate 116 in the thickness direction, that is, the top plate 131 has the same height as the first side plate 116. Therefore, with the fitting slot 1331 extending to the top plate 131, the fitting slot 1331 may be in fit with and engaged with the protrusion 117 located at the edge of the first side plate 116.

Optionally, a plane where the top plate 131 is located may coincide with the plane where the protrusion 117 is located. Therefore, it may be understood that, the fitting slot 1331 may also be regarded as a notch formed on the top plate 131, and the protrusion 117 is used to complement the notch.

Optionally, the fitting slot 1331 does not extend to the first end plate 132, so that the fitting slot 1331 is spaced apart from the first end plate 132.

It may be understood that, since the protrusion 117 is also located at the same side of the side baffle 112, in order to enable the protrusion 117 to be in fit with and engaged with the fitting slot 1331, the protrusion 117 is also located at one end of the side baffle 112 away from the symmetry plane S and spaced apart from the side baffle 112.

The protrusion 117 is designed on the bracket 11 and the fitting slot 1331 is designed on the mounting member 13, so that the protrusion 117 may be in fit with and engaged with the fitting slot 1331, thereby improving the connection stability between the bracket 11 and the mounting member 13. Meanwhile, the protrusion 117 may be mirror-symmetrical relative to the symmetry plane S, enabling the protrusion 117 to cooperate with the mounting member 13 to provide support for a middle part of the end cover assembly 10, preventing the middle part of the end cover assembly 10 from falling.

In an embodiment, reference is made to FIG. 4, a spaced distance *H*1 between one end of the side baffle 112 away from the bottom plate 111 and the cover plate 14 is in a range from 0.01mm to 0.95mm. Specifically, there is still a distance between the bottom plate 111 and the closest position of the side baffle 112 to the bottom plate 111, that is, the size of the second airflow channel 115 in the thickness direction of the bottom plate 111 is in a range from 0.01mm to 0.95mm. Specifically, the spaced distance *H*1 may be 0.55mm, 0.6mm, 0.65mm, 0.7mm, and 0.75mm. Designing the spaced distance *H*1 within this range facilitates air flowing to the accommodating space 113 through the second airflow channel 115 and prevents other foreign matter from passing through the airflow channel. In the case where the spaced distance *H*1 is less than the above range, the spacing is too small to define an airflow channel for the free flow of air. In the case where the spaced distance *H*1 is greater than the above range, the spacing is too large, and thus foreign matter such as broken tabs or insulating films inside the end cover assembly 10 may easily pass through the airflow channel and drift into the accommodating space 113 in an airflow direction, resulting in failure of the explosion-proof valve.

In an embodiment, reference is made to FIG. 6, a spaced distance *H*2 between one side of the protrusion 117 close to the symmetry plane S and the side baffle 112 in a length direction of the bottom plate 111 is in a range from 1.5mm to 4.5mm. Specifically, based on the above embodiments, since the protrusion 117 is in fit with and engaged with the fitting slot 1331, the protrusion 117 is spaced apart from the side baffle 112. Taking FIG. 6 as an example, the protrusion 117 is located at the left of the side baffle 112, and the symmetry plane S is located at the right of the side baffle 112. Therefore, the side of the protrusion 117 close to the symmetry plane S is the side of the protrusion 117 closest to the side baffle 112, and the first end plate 132 is located between the protrusion 117 and the side baffle 112. The specific size of the spaced distance *H*2 may be 1.8mm, 1.9mm, 2mm, 2.1mm, and 2.2mm. Designing the spaced distance *H*2 within this range ensures gaps between the outermost edges on both sides of the side baffle 112 and a part of the mounting member 13 closest to the explosion-proof-valve bracket 12, ensuring that there is sufficient space between the first end plate 132 and the side baffle 112 to define the first airflow channel 114. It also facilitates the snap-fit assembly of the protrusion 117 and the fitting slot 1331, and a cooperating allowance is designed. In the case where the spaced distance *H*2 is less than the above range, the spacing is too small to define an airflow channel for the free flow of air. In the case where the spaced distance *H*2 is greater than the above range, the spacing is too large, and thus foreign matter such as broken tabs or insulating films inside the end cover assembly 10 may easily pass through the airflow channel and drift into the accommodating space 113 in an airflow direction, resulting in failure of the explosion-proof valve.

In an embodiment, an orthographic projection of the protrusion 117 on the bottom plate 111 is in a shape of a trapezoid, one end of the protrusion 117 away from the first side plate 116 is a short base of the trapezoid, and one end of the protrusion 117 connected to the first side plate 116 is a long base of the trapezoid. Specifically, the orthogonal projection of the protrusion 117 on the bottom plate 111 is in a shape of a trapezoid, specifically, it may be a regular trapezoid. Moreover, the long base of the protrusion 117 may be connected to the first side plate 116, so that the protrusion 117 has a tapered shape in the direction away from the first side plate 116.

Optionally, the orthogonal projection of the protrusion 117 on the bottom plate 111 may also be in a shape of a hexagon. For example, the original shape of the protrusion 117 may be quadrilateral, and sharp corners at the two ends away from the first side plate 116 may be chamfered, thereby forming a hexagon.

The protrusion 117 is disposed on the bracket 11 and the orthographic projection of the protrusion 117 on the bottom plate 111 is in a shape of a trapezoid, which facilitates the smoothness when the protrusion 117 is engaged with the mounting member 13, thereby improving the reliability of the assembly of the end cover assembly 10.

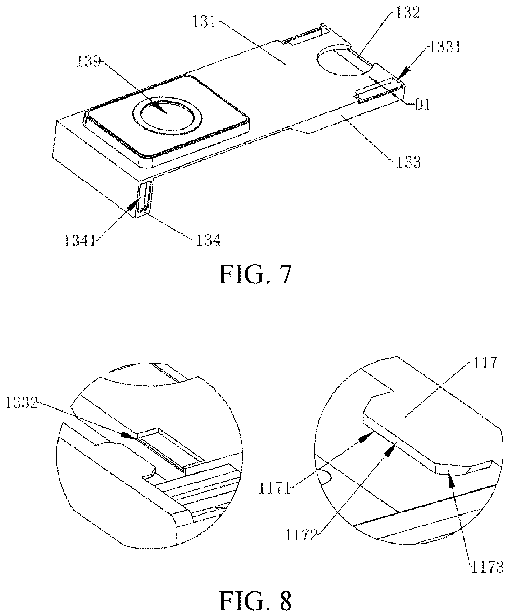

In an embodiment, reference is made to FIG. 6 and FIG. 7, a ratio *D*1 : *H*3 of a depth *D*1 of the fitting slot 1331 to a height *H*3 of the protrusion 117 protruding relative to the first side plate 116 is in a range from 1.15 to 3.85. Specifically, the depth *D*1 of the fitting slot 1331 may be considered as an extension depth in the width direction of the top plate 131. *D*1 : *H*3 being in a range from 1.15 to 3.85 may be considered as the depth *D*1 of the fitting slot 1331 being greater than the height *H*3 of the protrusion 117. Therefore, after the protrusion 117 extends into the fitting slot 1331, one end of the protrusion facing away from the first side plate 116 is still spaced apart from the top plate 131 in the width direction. Specifically, *D*1 : *H*3 may be 1.2, 1.24, 1.26, 1.28, and 1.30. The ratio of the depth *D*1 of the fitting slot 1331 to the height *H*3 of the protrusion 117 is designed to be greater than 1, ensuring that the protrusion 117 can be fully inserted into the fitting slot 1331.

In an embodiment, reference is made to FIG. 8, at least two adjacent surfaces of the protrusion 117 which are connected to the second side plate 133 are connected via an arc surface. Specifically, the protrusion 117 may include a top surface 1172 facing away from the first side plate 116, a bottom surface 1171 facing towards the bottom plate 111, and two opposite oblique edge surfaces 1173. The bottom surface 1171 is connected to the top surface 1172 and the two oblique edge surfaces 1173. The oblique edge surfaces 1173 are the surfaces formed by the isosceles oblique edges of the protrusion 117. It may be understood that, after the protrusion 117 is inserted, the bottom surface 1171 and the two oblique edge surfaces 1173 may be connected to the second side plate 133. Therefore, the bottom surface 1171 and the two oblique edge surfaces 1173 may be connected via arc surfaces. However, the bottom surface 1171 and the top surface 1172 may be connected via an arc surface. The protrusion 117 is designed with an arc surface connection, which facilitates the insertion of the protrusion 117 into the fitting slot 1331 and reduces the resistance during the insertion of the protrusion 117.

In an embodiment, reference is made to FIG. 8, the protrusion 117 has a first oblique surface (not illustrated in the drawings) between an end surface of the protrusion 117 facing away from the first side plate 116 and a surface of the protrusion 117 facing towards the bottom plate 111, and the fitting slot 1331 has a corresponding second oblique surface 1332 at an opening of the fitting slot 1331.

Specifically, the protrusion 117 includes the aforementioned top surface 1172 facing away from the first side plate 116 and the bottom surface 1171 facing towards the bottom plate 111. The top surface 1172 and the bottom surface 1171 may be connected by the first oblique surface (not illustrated in the drawings). It may be understood that, the first oblique surface is connected to the top surface 1172 at an angle and connected to the bottom surface 1171 at an angle.

Optionally, the second side plate 133 includes a side surface facing towards the first side plate 116 and a fitting surface for enclosing the fitting slot 1331. The fitting surface may be parallel to the plane at which the top plate 131 is located. The side surface and the fitting surface are connected by the second oblique surface 1332. It may be understood that, the second oblique surface 1332 is connected to the side surface at an angle and connected to the fitting surface at an angle.

When the protrusion 117 is inserted into the fitting slot 1331, the first oblique surface and the second oblique surface 1332 are mutually parallel and in contact.

The protrusion 117 is designed to have the first oblique surface and the opening of the fitting slot 1331 is designed to have the second oblique surface 1332, which facilitates smooth insertion of the protrusion 117 by means of the cooperation of the oblique surfaces, thereby improving the speed of the installation and insertion of the protrusion 117.

In an embodiment, reference is made to FIG. 4, FIG. 6, and FIG. 7, the bracket 11 further includes a first buckle 118, the first buckle 118 is connected to the first side plate 116, and the first buckle 118 is located at one end of the protrusion 117 away from the symmetry plane S. The mounting member 13 further includes a snapping plate 134 on a same plane with the second side plate 133, the snapping plate 134 defines a first snapping hole 1341 opposite to the first buckle 118, and the first buckle 118 passes through the first snapping hole 1341 to connect to the snapping plate 134.

Specifically, the first buckle 118 protrudes from the surface of the first side plate 116 and is located at one side of the protrusion 117 away from the symmetry plane S. The first buckle 118 may be a "1-shaped" buckle, and is used to fix the mounting member 13. The first buckle 118 is close to the symmetry plane S. There is another corresponding first buckle 118, where the two first buckles are symmetrical relative to the symmetry plane S. Specifically, the first buckle 118 may include a first left buckle 118A and a first right buckle 118B. Therefore, the first left buckle 118A and the first right buckle 118B are disposed opposite to each other in the length direction of the bottom plate 111.

Optionally, the first buckles 118 are located at two opposite ends of the first side plate 116.

Optionally, the mounting member 13 further includes the snapping plate 134 in the same plane as the second side plate 133, and a second end plate 132S disposed opposite to the first end plate 132 in the length direction of the top plate 131. The snapping plate 134 may be plate-shaped, with a rectangular plate surface. The second end plate 132S is located at one end of the top plate 131 away from the first end plate 132, and the second end plate 132S is connected to the snapping plate 134 at an angle. Optionally, the angle between the second end plate 132S and the snapping plate 134 may be 90°.

Optionally, the first snapping hole 1341 extends through two opposite surfaces of the snapping plate 134, which allows the first buckle 118 to pass through the first snapping hole 1341 to form a mating connection.

Optionally, the snapping plate 134 is of a square-ring shape by defining the first snapping hole 1341.

The first buckle 118 is disposed on the bracket 11 and the first snapping hole 1341 is defined on the mounting member 13, which facilitates mutual fixation of the bracket 11 and the mounting member 13 by means of the first buckle 118. Moreover, the first buckle 118 may be mirror-symmetrical relative to the symmetry plane S, so that the bracket 11 has two symmetrical first buckles 118. With the snap-fit of the two first buckles 118, the first buckles 118 may still be snap-fitted with the mounting member 13 even if the bracket 11 breaks, improving the stability and thereby enhancing the service life of the energy-storage apparatus.

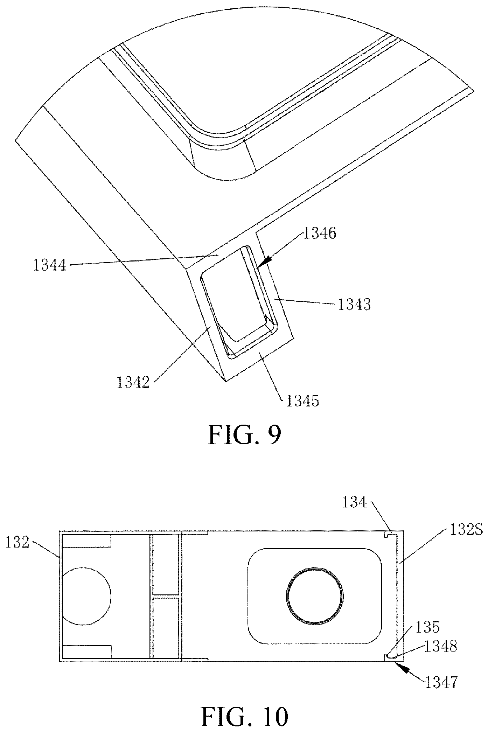

In an embodiment, reference is made to FIG. 6 and FIG. 9, the first buckle 118 has a third oblique surface 1181 at one end of the first buckle 118 away from the first side plate 116, and the first snapping hole 1341 has a corresponding fourth oblique surface 1346 at an opening of the first snapping hole 1341. Specifically, since the first buckle 118 may be a "1-shaped" buckle, at least one third oblique surface 1181 exists at one end of the first buckle 118 away from the first side plate 116. The third oblique surface 1181 may be connected to the plane at which the first side plate 116 is located at an angle.

Optionally, the surface of the snapping plate 134 facing towards the first side plate 116 may be a fourth oblique surface 1346. For example, based on the snapping plate 134 of a square-ring shape in the above embodiment, the snapping plate 134 may include specifically an upper edge 1344 and a lower edge 1345 opposite to each other, and a left edge 1342 and a right edge 1343 opposite to each other. The left edge 1342 may be connected to the second end plate 132S, and the upper edge 1344 may be connected to the top plate 131. The fourth oblique surface 1346 may be located on the right edge 1343. The fourth oblique surface 1346 is inclined from one side close to the second end plate 132S toward an insertion direction of the first buckle 118.

Optionally, in the case where the first buckle 118 is inserted, the third oblique surface 1181 and the fourth oblique surface 1346 are mutually parallel and in contact.

The first buckle 118 having the third oblique surface 1181 and the first snapping hole 1341 having the fourth oblique surface 1346 facilitate a smooth insertion of the first buckle 118 by means of the cooperation of the oblique surfaces, thereby improving the speed of the installation and insertion of the first buckle 118.

In an embodiment, reference is made to FIG. 9 and FIG. 10, the snapping plate 134 has a first surface 1347 and a second surface 1348 opposite to each other, the first surface 1347 faces towards the first side plate 116, the first snapping hole 1341 extends through from the first surface 1347 to the second surface 1348, and the first snapping hole 1341 has a tapered shape in a direction from the first surface 1347 to the second surface 1348.

Specifically, in order to make the first snapping hole 1341 have a tapered shape in the direction from the first surface 1347 to the second surface 1348, at least four oblique surfaces may be formed on the snapping plate 134. For example, based on the right edge 1343 having the fourth oblique surface 1346 in the above embodiment, the left edge 1342, the upper edge 1344, and the lower edge 1345 each may have an oblique surface inclining in the insertion direction of the first buckle 118. Therefore, the first snapping hole 1341 may have a tapered shape in the direction from the first surface 1347 to the second surface 1348.

The first snapping hole 1341 is designed to have a tapered shape in the direction from the first surface 1347 to the second surface 1348, so that all sides of the first snapping hole 1341 may be shaped as oblique surfaces to guide the first buckle 118, facilitating the insertion and engagement of the first buckle 118.

In an embodiment, reference is made to FIG. 10, the mounting member 13 further comprises a rib 135. The rib 135 is connected to the second surface 1348 and the top plate 131, and extends in a direction facing away from the first surface 1347.

Specifically, the rib 135 may be connected to the right edge 1343 and may extend away in the direction facing away from the first surface 1347.

Optionally, the first buckle 118 may include an extending portion and a protruding portion, where the extending portion is the straight part of the "1-shape", and the protruding portion is the part protruding from the side of the extending portion. After the first buckle 118 extends into the first snapping hole 1341, the protruding portion may hook onto the rib 135, such that the rib 135 is located between the protruding portion and the right edge 1343.

The rib 135 is disposed on one side of the snapping plate 134, so that the structural strength of the snapping plate 134 may be enhanced, preventing bending deformation of the snapping plate 134. Meanwhile, the rib 135 may also be used to protect the end of the first buckle 118, avoiding accidental disengagement due to mistaken touching, thereby enhancing the connection stability of the first buckle 118 and improving the service life of the energy-storage apparatus 100.

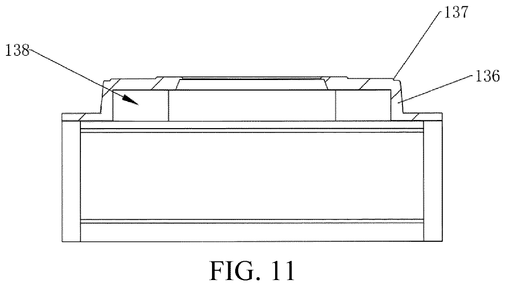

In an embodiment, reference is made to FIG. 11, the top plate 131 includes a first boss portion 136 and a second boss portion 137 connected to each other. The first boss portion 136 protrudes from a plane at which the top plate 131 is located to a direction away from the bottom plate 111, the second boss portion 137 is located at one end of the first boss portion 136 away from the bottom plate 111, and an annular step is formed at a connection between the first boss portion 136 and the second boss portion 137.

Specifically, the first boss portion 136 is annular and protrudes upward from the plane at which the top plate 131 is located. The second boss portion 137 is also annular and protrudes upward from the second boss portion 137. The first boss portion 136 and the second boss portion 137 may cooperatively define a terminal-post space 138 for accommodating a terminal post. Optionally, the terminal post is made of metal, including a positive terminal post and a negative terminal post. The positive terminal post may be made of, for example, aluminum. The negative terminal post may be made of, for example, copper or copper-aluminum composite material. The positive terminal post is electrically connected to a positive tab of an electrode assembly, and the negative terminal post is electrically connected to a negative tab of the electrode assembly. The positive terminal post is located in a space enclosed by a positive-electrode mounting member 13A, and the negative terminal post is located in a space enclosed by a negative-electrode mounting member 13B.

Optionally, a cross-sectional shape of the first boss portion 136 taken parallel to the plane at which the top plate 131 is located may be quadrilateral or elliptical. A cross-sectional shape of the second boss portion 137 taken parallel to the plane at which the top plate 131 is located may be quadrilateral or elliptical. Moreover, a peripheral dimension of the second boss portion 137 may be greater than a peripheral dimension of the first boss portion 136 (not illustrated in the drawings). It may be understood that, the difference in the peripheral dimensions between the first boss portion 136 and the second boss portion 137 is to facilitate a snap-fit connection when the top plate 131 is engaged with the cover plate 14, thereby increasing the connection strength and sealing performance between the top plate 131 and the cover plate 14. Therefore, in other embodiments, the peripheral dimension of the second boss portion 137 may be less than the peripheral dimension of the first boss portion 136, such that an annular step may be formed at the connection between the first boss portion 136 and the second boss portion 137.

The first boss portion 136 and the second boss portion 137 are formed on the top plate 131, and the first boss portion 136 and the second boss portion 137 combine to form an annular step, which helps to improve the sealing performance between the mounting member 13 and the cover plate 14, thereby enhancing the safety performance of the energy-storage apparatus. It also facilitates the snap-fit positioning when the top plate is installed onto the cover plate 14 from bottom to top, reducing assembly difficulty.

In an embodiment, reference is made to FIG. 10 and FIG. 11, the second boss portion 137 defines a terminal-post hole 139. The terminal-post hole 139 has a tapered shape in a direction from the bottom plate 111 to the top plate 131. Specifically, the second boss portion 137 defines a terminal-post hole 139 extending through the second boss portion 137 in a thickness direction of the second boss portion 137, so that the terminal-post space 138 communicates with the external environment through the terminal-post hole 139. After the terminal post is accommodated in the terminal-post space 138, the terminal-post hole 139 is closed to prevent gas leakage from the terminal-post hole 139, ensuring the sealing property of the internal space of the energy-storage apparatus 100.

Optionally, the terminal post is also connected to a sealing ring. After the terminal post is placed in the terminal-post space 138, the terminal post is in contact with edges of the terminal-post hole 139 through the sealing ring.

The terminal-post hole 139 designed in a tapered shape facilitates the deformation and outward expansion of a flange portion of the sealing ring under pressure during a pressing process of a terminal-post, so that the flange portion of the sealing ring abuts against the terminal-post hole thereby filling the gaps in the terminal-post hole 139. The contact area between the flange portion of the sealing ring and side walls of the terminal-post hole increases, further improving the sealing performance and thereby enhancing the safety performance of the energy-storage apparatus.

In an embodiment, reference is made to FIG. 4 to FIG. 6, the end cover assembly 10 further includes an explosion-proof-valve bracket 12. The bracket 11 further includes a second buckle 119, the second buckle 119 is connected to the first side plate 116, and the second buckle 119 is located between the protrusion 117 and the symmetry plane S. The explosion-proof-valve bracket 12 defines a second snapping hole 121, the second buckle 119 passes through the second snapping hole 121 to connect to the explosion-proof-valve bracket 12, and a height of the second buckle 119 protruding relative to the first side plate 116 is greater than a height of the first buckle 118 protruding relative to the first side plate 116.

Specifically, the second buckle 119 protrudes from the surface of the first side plate 116 and is located at one end of the protrusion 117 close to the symmetry plane S. The second buckle 119 may be located in the accommodation space 113. The second buckle 119 may be a "1-shaped" buckle for fixing the explosion-proof-valve bracket 12. The second buckle 119 is close to the symmetry plane S, and there is another corresponding second buckle 119, where the two second buckles 119 are symmetrical relative to the symmetry plane S. Specifically, the second buckle 119 may include a second left buckle 119A and a second right buckle 119B. Therefore, the second left buckle 119 A and the second right buckle 119 B are disposed opposite to each other in the length direction of the bottom plate 111.

Optionally, the explosion-proof-valve holder 12 is located between the bottom plate 111 and the cover plate 14. The explosion-proof-valve holder 12 is connected to the cover plate 14.

Optionally, the explosion-proof-valve holder 12 may include a baffle 122, a first connecting plate 123, and a second connecting plate 124. The baffle 122 is opposite to the bottom plate 111 and the cover plate 14. The first connecting plate 123 and the second connecting plate 124 are connected to two ends of the baffle 122 in a length direction of the baffle 122, respectively. The first connecting plate 123 and the second connecting plate 124 are also connected to the cover plate 14.

Optionally, the explosion-proof-valve bracket 12 may have a mirror-symmetric structure, and a symmetry plane may be the same as the symmetry plane S of the bracket 11 in the above embodiments, that is, the first connecting plate 123 and the second connecting plate 124 are mirror-symmetrical. A cross-section of the explosion-proof-valve bracket 12 in the thickness direction of the bottom plate 111 is substantially of a shape of a Chinese character " 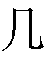 ". It may be understood that, both the first connecting plate 123 and the second connecting plate 124 described above may be curved plates.

Optionally, there may be two second snapping holes 121 on the first connecting plate 123 and the second connecting plate 124, respectively. Since the explosion-proof-valve bracket 12 is mirror-symmetrical, the first connecting plate 123 is taken as an example. A fixing hole extends through two opposite surfaces of a connecting plate, and at least part of a buckle extends into the fixing hole to be connected and fixed with the first connecting plate 123.

The second buckle 119 is disposed on the bracket 11 and the second snapping hole 121 is defined on the explosion-proof-valve bracket 12, which facilitates mutual fixation of the bracket 11 and the explosion-proof-valve bracket 12 by means of the second buckle 119. Moreover, the benefit of the second buckle 119 being longer than the first buckle 118 is that during engagement, the second buckle 119 in the middle region may be engaged first, followed by engaging the first buckles 118 at both ends. This reduces the difficulty of simultaneous engagement of the buckles and lowers the requirements for precision in the assembly operation.

In an embodiment, reference is made to FIG. 3 and FIG. 5, the bracket 11 is implemented as two brackets 11. The two brackets 11 are mirror-symmetrical, and the mounting member 13 is located between the two brackets 11.

Specifically, in the end cover assembly 10, the bracket 11 may be implemented as two brackets 11, namely a first bracket 11A and a second bracket 11B. The first bracket 11A and the second bracket 11B are mirror-symmetrical. Therefore, both the first bracket 11A and the second bracket 11B possess all the features of the bracket 11 described in the above embodiments.

Optionally, the first bracket 11A defines a first accommodating space, and the second bracket 11B defines a second accommodating space. These two accommodating spaces together form the accommodating space 113, and the explosion-proof-valve bracket 12 mentioned above is accommodated in the accommodating space 113.

The number of molds required for manufacturing the bracket is reduced, and the compatibility rate of the bracket is improved, thereby reducing the manufacturing cost. The bracket 11 is designed as two mirror-symmetrical brackets 11 with the mounting member 13 located between the two brackets 11, so that the mounting member 13 may be effectively fixed using the brackets 11, and the forces applied at both ends are the same, avoiding deformation of the mounting member 13.

Based on the bracket 11, the end cover assembly 10, and the energy-storage apparatus 100 of the aforementioned embodiments of the disclosure, embodiments of the disclosure further provide an electricity-consumption device including the energy-storage apparatus 100 of embodiments of the disclosure. The energy-storage apparatus 100 is configured to supply power to the electricity-consumption device.

In the description, for convenience, wordings indicating directional or positional relationships, such as "middle", "upper", "lower", "front", "back", "vertical", "horizontal", "top", "bottom", "inside", and "outside", are used for illustrating positional relationships between constituent elements with reference to the drawings, and are merely for facilitating the illustration of the description and simplifying the description, rather than indicating or implying that a referred apparatus or element must have a particular orientation and be constructed and operated in the particular orientation. Therefore, they cannot be understood as limitations on the disclosure. The positional relationships between the constituent elements may be changed as appropriate according to directions for describing the constituent elements. Therefore, appropriate replacements may be made according to situations without being limited to the wordings described in the description.

The above embodiments may be preferred embodiments of the disclosure, and may not be used to limit the scope of the disclosure. Those of ordinary skill in the field may understand all or a part of the process that realizes the above embodiments, and equivalent changes made in accordance with the claims of the disclosure still belong to the scope of the disclosure.

## Claims

1. An end cover assembly (10) for an energy-storage apparatus (100), comprising:
a bracket (11) comprising a bottom plate (111) and a side baffle (112), wherein the bottom plate (111) is connected to the side baffle (112), the side baffle (112) extends in a thickness direction of the bottom plate (111), the bracket (11) has a plane-symmetric structure relative to a symmetry plane (S), and the symmetry plane (S) is perpendicular to a plane at which the bottom plate (111) is located; and the side baffle (112) is close to the symmetry plane (S), and the bottom plate (111) and the side baffle (112) cooperatively define an accommodating space (113);
a mounting member (13) comprising a top plate (131) and a first end plate (132) connected at an angle, wherein the top plate (131) is disposed opposite to and spaced apart from the bottom plate (111), and the first end plate (132) is disposed opposite to and spaced apart from the side baffle (112), to define a first airflow channel (114); and
a cover plate connected to the top plate (131) and located at one side of the top plate (131) facing away from the bottom plate (111), wherein the cover plate is spaced apart from the side baffle (112) to define a second airflow channel (115), and the second airflow channel (115) communicates with the first airflow channel (114) and the accommodating space (113).

2. The end cover assembly (10) of claim 1, wherein the side baffle (112) extends in the thickness direction of the bottom plate (111) and extends towards one side facing away from the symmetry plane (S), the side baffle (112) has a first curved segment (1121), a second curved segment (1122), and a third curved segment (1123) sequentially connected, and a ratio of the first curved segment (1121) to the second curved segment (1122) to the third curved segment (1123) is (2 - 3.5) : (1.2 - 1.8) : 1.

3. The end cover assembly (10) of claim 1, wherein a spaced distance *H*1 between one end of the side baffle (112) away from the bottom plate (111) and the cover plate is in a range from 0.01mm to 0.95mm.

4. The end cover assembly (10) of claim 1, wherein the bracket (11) further comprises a first side plate (116) and a protrusion (117), the side baffle (112), the bottom plate (111), and the protrusion (117) each are connected to a same side of the first side plate (116), the protrusion (117) is located at one side of the side baffle (112) facing away from the bottom plate (111), and the protrusion (117) is close to the symmetry plane (S); and the mounting member (13) comprises a second side plate (133), the second side plate (133) is connected at an angle to the bottom plate (111) and the first end plate (132), the second side plate (133) is disposed opposite to the first side plate (116), the second side plate (133) defines a fitting slot (1331) extending to the top plate (131), and the protrusion (117) is in fit with and connected to the fitting slot (1331).

5. The end cover assembly (10) of claim 4, wherein a spaced distance *H*2 between one side of the protrusion (117) close to the symmetry plane (S) and the side baffle (112) in a length direction of the bottom plate (111) is in a range from 1.5mm to 4.5mm.

6. The end cover assembly (10) of claim 4 or 5, wherein an orthographic projection of the protrusion (117) on the bottom plate (111) is in a shape of a trapezoid, one end of the protrusion (117) away from the first side plate (116) is a short base of the trapezoid, and one end of the protrusion (117) connected to the first side plate (116) is a long base of the trapezoid.

7. The end cover assembly (10) of any one of claims 4 to 6, wherein a ratio *D*1 : *H*3 of a depth *D*1 of the fitting slot (1331) to a height *H*3 of the protrusion (117) protruding relative to the first side plate (116) is in a range from 1.15 to 3.85.

8. The end cover assembly (10) of any one of claims 4 to 7, wherein at least two adjacent surfaces of the protrusion (117) which are connected to the second side plate (133) are connected via an arc surface.

9. The end cover assembly (10) of any one of claims 4 to 8, wherein the protrusion (117) has a first oblique surface between an end surface of the protrusion facing away from the first side plate (116) and a surface of the protrusion facing towards the bottom plate (111), and the fitting slot (1331) has a corresponding second oblique surface (1332) at an opening of the fitting slot.

10. The end cover assembly (10) of any one of claims 4 to 9, wherein the bracket (11) further comprises a first buckle (118), the first buckle (118) is connected to the first side plate (116), the first buckle (118) is located at one end of the protrusion (117) away from the symmetry plane (S); and the mounting member (13) further comprises a snapping plate (134) on a same plane with the second side plate (133), the snapping plate (134) defines a first snapping hole (1341) opposite to the first buckle (118), and the first buckle (118) passes through the first snapping hole (1341) to connect to the snapping plate (134).

11. The end cover assembly (10) of claim 10, wherein the first buckle (118) has a third oblique surface (1181) at one end of the first buckle away from the first side plate (116), and the first snapping hole (1341) has a corresponding fourth oblique surface (1346) at an opening of the first snapping hole.

12. The end cover assembly (10) of claim 10 or 11, wherein the snapping plate (134) has a first surface (1347) and a second surface (1348) opposite to each other, the first surface (1347) faces towards the first side plate (116), the first snapping hole (1341) extends through from the first surface (1347) to the second surface (1348), and the first snapping hole (1341) has a tapered shape in a direction from the first surface (1347) to the second surface (1348).

13. The end cover assembly (10) of claim 12, wherein the mounting member (13) further comprises a rib (135), the rib (135) is connected to the second surface (1348) and the top plate (131), and extends in a direction facing away from the first surface (1347).

14. The end cover assembly (10) of any one of claims 4 to 13, wherein the top plate (131) comprises a first boss portion (136) and a second boss portion (137) connected to each other, the first boss portion (136) protrudes from a plane at which the top plate (131) is located to a direction away from the bottom plate (111), the second boss portion (137) is located at one end of the first boss portion (136) away from the bottom plate (111), and an annular step is formed at a connection between the first boss portion (136) and the second boss portion (137).

15. The end cover assembly (10) of claim 14, wherein the second boss portion (137) defines a terminal-post hole (139), an aperture size of part of the terminal-post hole (139) close to the bottom plate is greater than an aperture size of part of the terminal-post hole (139) away from the bottom plate.

16. The end cover assembly (10) of any one of claims 10 to 13, wherein the end cover assembly (10) further comprises an explosion-proof-valve bracket (12), the bracket (11) further comprises a second buckle (119), the second buckle (119) is connected to the first side plate (116), and the second buckle (119) is located between the protrusion (117) and the symmetry plane (S); and the explosion-proof-valve bracket (12) defines a second snapping hole (121), the second buckle (119) passes through the second snapping hole (121) to connect to the explosion-proof-valve bracket (12), and a height of the second buckle (119) protruding relative to the first side plate (116) is greater than a height of the first buckle (118) protruding relative to the first side plate (116).

17. The end cover assembly (10) of any one of claims 1 to 16, wherein the bracket (11) is implemented as two brackets (11), the two brackets (11) are mirror-symmetrical, and the mounting member (13) is located between the two brackets (11).

18. An energy-storage apparatus (100) comprising an electrode assembly (20), a housing (30), and the end cover assembly (10) of any one of claims 1 to 17, wherein the electrode assembly (20) is disposed within the housing (30), and the end cover assembly (10) is electrically connected to the electrode assembly (20).

19. An electricity-consumption device comprising the energy-storage apparatus (100) of claim 18, wherein the energy-storage apparatus (100) is configured to supply power to the electricity-consumption device.
